# EUROPEAN PATENT APPLICATION

(11) **EP 2 418 573 A2**
(43) Date of publication of application: **15.02.2012**
(21) Application number: 11177217.4
(22) Date of filing: 11.08.2011
(51) Int. Cl.: G06F 3/048, G06F 3/041

(54) **Display apparatus and method for moving displayed object**

(30) Priority: 13.08.2010 KR 20100078294
(71) Applicant: SAMSUNG ELECTRONICS CO., LTD., Suwon-si, Gyeonggi-do (KR)
(72) Inventor: Han, Young-ran, Gyeonggi-do (KR); Lee, Chang-won, Incheon (KR); Choi, Kyoung-oh, Seoul (KR)
(74) Representative: Hewett, Jonathan Michael Richard

(57) **Abstract**

A display apparatus and a method for moving a displayed object are provided. The display apparatus includes a display which displays an object; a proximity sensor which senses an input proximate to the display; a touch sensor which senses a touch input to the display; a coordinates calculator which calculates coordinates corresponding to one of the proximate input sensed by the proximity sensor and the touch input sensed by the touch sensor; and a controller which controls the display to move the object to the calculated coordinates.

## Description

The present invention relates to a display apparatus and method for moving object thereof, and more particularly, to a display apparatus comprising a proximity sensing and touch sensing apparatus and a method for moving object thereof.

In a related art touch display, general touch screen technology was integrated therein so that one could select, move, or operate an object such as a menu on a display by touching the display using hands or tools, instead of making inputs using a keyboard or a mouse.

There are various touch screen technologies providing such functions, but most technologies are adapted to recognize coordinates of the finger which touched the display. Furthermore, in order to enhance the recognition effects, algorithms were configured so that the resolution of the coordinates could be identical to the resolution of the pixels. For example, when a finger touches a point on a display, a touch screen module recognizes the location where the finger touched P(x, y) and waits for the next touch coordinates. In order for the touch screen module to recognize the location where the finger touched, the finger and the surface of the touch screen must meet each other, and a continuous touch event must occur.

Such a related art touch screen technology is not so inconvenient in a small size display, but as the display gets bigger, the user inconvenience and disadvantages in the movement of the coordinates increase. For example, when the display is bigger than the length of a person's hand, the hand may slip from the surface of the screen when it touches the screen and moves, thereby stopping a continuous touch event. Therefore, the user has to consciously make efforts so that his/her finger does not slip from the surface of the screen, and the user also feels an unpleasant sensation due to friction with the display surface.

According to an aspect of the present invention, there is provided a display apparatus including a display unit which displays an object; a proximate sensing unit which is configured to sense a proximate input to the display unit; a touch sensing unit which is configured to sense a touch input to the display unit; a coordinates calculating unit which calculates coordinates corresponding to at least one of the proximate input sensed by the proximate sensing unit and the touch input sensed by the touch sensing unit; and a controlling unit which controls the display unit to move the object to the calculated coordinates.

The coordinates calculating unit may calculate, when the touch input is sensed by the touch sensing unit after the proximate input is sensed by the proximate sensing unit, the coordinates based on the touch input sensed by the touch sensing unit.

Furthermore, the coordinates calculating unit may calculate, when the touch input is not sensed after the proximate input is sensed by the proximate sensing unit, the coordinates based on the proximate input sensed by the proximate sensing unit.

A sensing resolution of the touch sensing unit may be higher that a sensing resolution of the proximate sensing unit.

The coordinates calculating unit may calculate, when the proximate input and the touch input alternate, the coordinates of a point at which a last input, among the proximate input and the touch input, stopped.

The touch sensing unit may be at least one of a resistive touch method, a capacitive touch method, an infrared (IR) touch method, an optical touch method, and a surface acoustic wave (SAW) touch method.

The proximate sensing unit may comprise a plurality of IR sensors or a plurality of optical lens arrays.

The proximate sensing unit may be distributed in a bezel of the display apparatus.

According to another aspect of the present invention, there is provided a method for moving an object of a display apparatus, the method including sensing at least one of a proximate input and a touch input to a display unit that displays an object; calculating coordinates according to the at least one of the proximate input and the touch input that is sensed; and moving the object to the calculated coordinates.

If the touch input is not sensed after the proximate input is sensed, the coordinates of the proximate input may be calculated; and the object may be moved to the calculated coordinates.

If the proximate input and the touch input are sensed alternately, coordinates of a point at which a last input, among the proximate input and the touch input, stopped may be calculated; and the object may be moved to the calculated coordinates.

The proximate input may be sensed using a sensor module comprising of a plurality of IR sensors or a plurality of optical lens arrays.

The touch input may be sensed using at least one of a resistive touch method, a capacitive touch method, an IR touch method, an optical touch method and a SAW touch method.

The touch input may be sensed at a higher sensing resolution than the proximate input.

According to another aspect of the present invention, there is provided a method for moving an object of a multi-display apparatus that includes a plurality of display apparatuses, the method including displaying an object on a first display apparatus among the plurality of display apparatuses; sensing at least one of a proximate input and a touch input of the object on the first display apparatus, the at least one of the proximate input and the touch input continuing to a second display apparatus of the plurality of display apparatuses; and moving the object to the second display apparatus according to the at least one of the proximate input and the touch input that is sensed.

The above and/or other aspects of the present invention will be more apparent by describing certain present disclosure with reference to the accompanying drawings, in which:
FIG. 1 is a block diagram of a display apparatus according to an exemplary embodiment;
FIGS. 2A and 2B illustrate a proximity sensing unit and a touch sensing unit, respectively, according to an exemplary embodiment;
FIG. 3 illustrates a method for calculating coordinates in the display apparatus according to an exemplary embodiment;
FIGS. 4A and 4B illustrate an exemplary embodiment of a dragging by a user according to an exemplary embodiment;
FIG. 5 illustrates an exemplary embodiment of a dragging by a user in a multi-display apparatus according to an exemplary embodiment;
FIG. 6 illustrates an exemplary embodiment of a dragging by a user in a display apparatus in which the proximity sensing unit is provided in a bezel according to an exemplary embodiment;
FIG. 7 is a flow chart of a method for moving an object of the display apparatus according to an exemplary embodiment; and
FIG. 8 is a flow chart of a method for moving an object of the multi-display apparatus according to an exemplary embodiment.

Certain exemplary embodiments are described in greater detail with reference to the accompanying drawings.

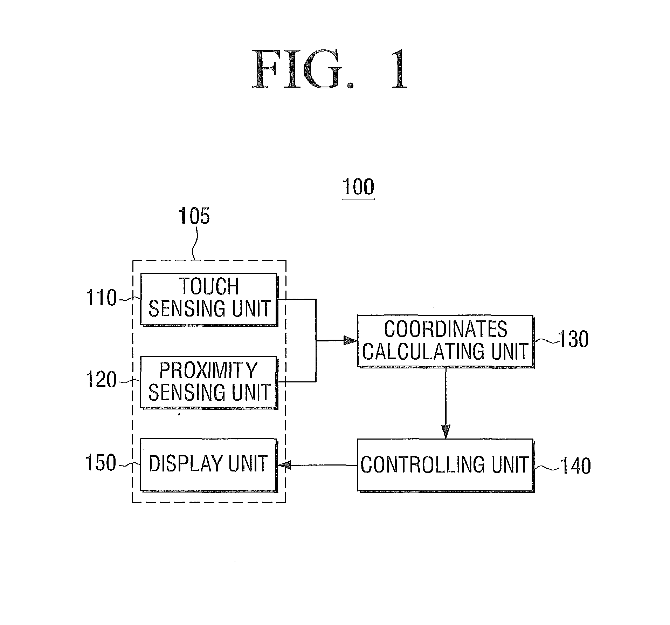

FIG. 1 is a block diagram of a display apparatus 100 according to an exemplary embodiment.

As illustrated in FIG. 1, the display apparatus 100 includes a touch sensing unit 110, a proximity sensing unit 120, a coordinates calculating unit 130, a controlling unit 140, and a display unit 150. Herein, the touch sensing unit 110, the proximity sensing unit 120, and the display unit 150 may be configured as one display panel 105.

Outputs of the touch sensing unit 110 and the proximity sensing unit 120 are provided to the coordinates calculating unit 130. The output of the coordinate calculating unit 130 is provided to the controlling unit 140. An output of the controlling unit 140 is provided to the display unit 150 and controls the display unit 150.

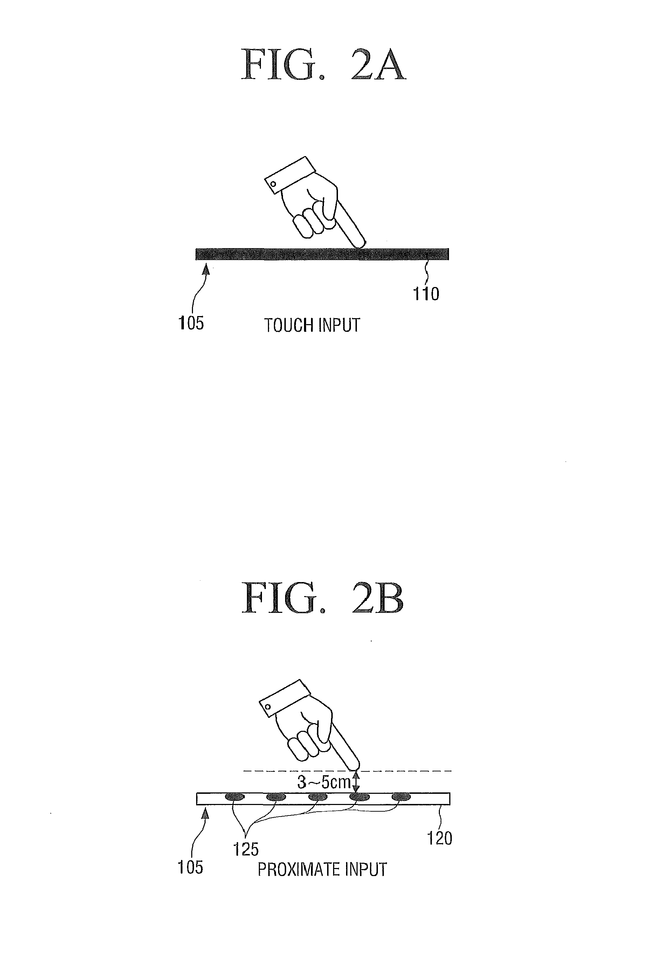

The touch sensing unit 110 and the proximity sensing unit 120 sense an input to the display unit 150. More detailed explanation of the touch sensing unit 110 and the proximity sensing unit 120 will be presented below with reference to FIG. 2.

FIGS. 2A and 2B illustrate the proximity sensing unit and the touch sensing unit, respectively, according to an exemplary embodiment.

As illustrated in FIG. 2A, the touch sensing unit 110 senses a touch input made by a direct contact of the display unit 150 by an input means (for example, a user's finger). This type of touch sensing unit 110 may sense the touch input by a number of different methods. For example, the touch sensing unit 110 may sense the touch input using a resistive touch method, a capacitive touch method, an infrared (IR) method, an optical touch method, or a surface acoustic wave (SAW) touch method. Herein, when an event of touching the touch screen occurs (i.e., when the touch input means touches the touch screen), the touch sensing unit 110 may obtain coordinates that are mapped on the resolution of the corresponding display.

As illustrated in FIG. 2B, the proximity sensing unit 120 senses an input which is not made by direct contact of the display unit 150 by the input means. The input is made by the input means maintaining a certain distance (for example, about 3 cm to 5 cm) from the display unit 150, and is referred to as a "proximate input", or an input proximate to the display. The proximity sensing unit 120 may also be referred to as a "proximate sensing unit" or a "proximate input sensing unit". The proximity sensing unit 120 may be embodied by a plurality of sensor module arrays 125 mounted on the display unit 150 in addition to the touch sensing unit 110. Herein, the sensor module may be an IR sensor or an optical lens. The proximity sensing unit 120 may sense the proximate input made by the input means from the certain distance (3~5cm) having coordinates of a resolution lower than that of the corresponding display unit 150.

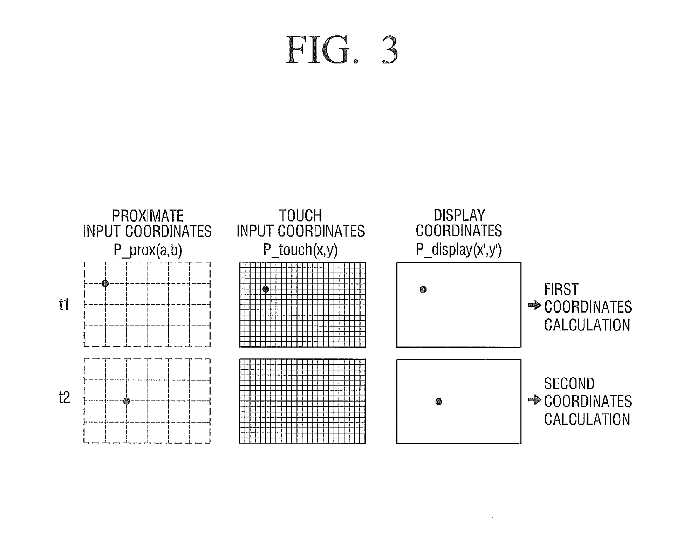

Referring to FIG. 1, the coordinates calculating unit 130 calculates coordinates corresponding to at least one of the touch input made by the touch sensing unit 110 and the proximate input made by the proximity sensing unit 120. A method of calculating coordinates using either of the touch input or the proximate input is used by coordinates calculating unit 130, and will be explained below with reference to FIG. 3.

FIG. 3 illustrates a method for calculating coordinates in the display apparatus according to an exemplary embodiment.

In FIG. 3, t₁ is a case in which both a proximate input by the proximity sensing unit 120 and a touch input by the touch sensing unit 110 are sensed. When both the proximate input and the touch input are sensed, the coordinates calculating unit 130 calculates the coordinates obtained by the touch input as the coordinates to be displayed on the display unit 150. More specifically, when there are both P_prox(a,b) coordinates obtained from the proximate input and P_touch(x,y) coordinates obtained from the touch input, P_display(x',y') coordinates to be displayed on the display unit 150 are the P_touch(x,y) coordinates obtained from the touch input. Therefore, when both a touch input and a proximate input are obtained, the coordinates calculating unit 130 calculates the coordinates of the touch input which has a higher resolution as the coordinates to be displayed on the display unit 150.

Meanwhile, t₂ illustrated in FIG. 3 is a case in which a proximate input by the proximity sensing unit 120 is sensed but a touch input by the touch sensing unit 110 is not sensed. When the proximate input is sensed and the touch input is not sensed, the coordinates calculating unit 130 calculates the coordinates obtained from the proximate input as the coordinates to be displayed on the display unit 150. More specifically, when P_prox(a,b) coordinates are obtained from the proximate input and no coordinates are obtained from the touch input, the P_display(x',y') coordinates to be displayed on the display unit 150 are the P_prox(a,b) coordinates obtained from the proximate input. Therefore, when the proximate input is sensed and the touch input is not sensed, the coordinates calculating unit 130 calculates the coordinates from the proximate input as the coordinates to be displayed on the display unit 150 even if the proximate input has a lower resolution.

In addition, when the proximate input and the touch input occur alternately, the coordinate calculating unit 130 calculates the coordinates of the point where the last input stopped, in other words the co-ordinates of the point at which the last input in a sequence of alternate proximate inputs and touch inputs occurs. More specifically, when the input of the point where the last input stopped after alternate inputs of the proximate inputs and touch inputs is a proximate input, the coordinates calculating unit 130 calculates the coordinates from the proximate input as the last coordinates. Likewise, when the input of the point where the last input stopped after alternate inputs of the proximate inputs and touch inputs is a touch input, the coordinates calculating unit 130 calculates the coordinates from the touch input as the last coordinates.

As aforementioned, by calculating the coordinates using the touch input sensed by the touch sensing unit 110 and the proximate input sensed by the proximity sensing unit 120, the user may not only obtain the coordinates by the touch input having a high resolution when the touch event of the display unit 150 is not stopped, but even when the touch event of the display unit 150 is stopped, the user becomes able to obtain the coordinates by the proximate input.

Referring to FIG. 1, the controlling unit 140 controls the overall operations of the display apparatus 100 according to a user command received from a user command receiving unit (not illustrated).

The controlling unit 140 controls the display unit 150 to move the object displayed on the display unit 150 to the coordinates obtained by the coordinates calculating unit 130. Herein, the object may be, for example, a menu, an icon, or a cursor, etc. The display unit 150 displays an image processed by an image processing unit (not illustrated). In addition, the display unit 150 displays various objects, and moves or operates the objects to the coordinates calculated by the coordinates calculating unit 130.

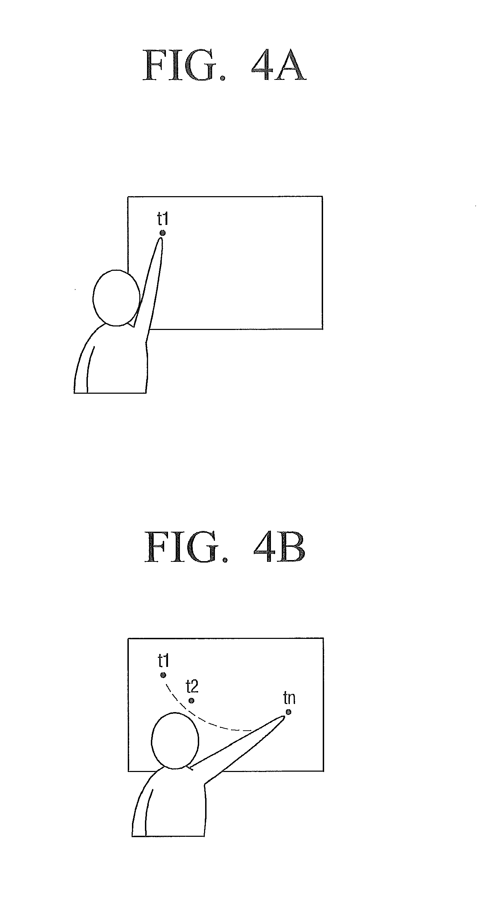

Hereinbelow, various exemplary embodiments will be explained with reference to FIGS. 4 to 6.

FIGS. 4A and 4B illustrate an exemplary embodiment of a dragging operation performed by a user according to an exemplary embodiment. More specifically, FIG. 4A illustrates a case in which the user starts to drag an object at t₁. As shown in FIG. 4B, the user drags the object from t₁ to tₙ. During the drag, the touch input is sensed from t₁ to t₂, but the touch contact fails from t₂ to tₙ, and thus the touch input is not sensed from t₂ to tₙ. However, from t₂ to tₙ, the user has maintained a certain distance (within 3∼5cm) between the display unit 150 and the input means.

In a related art touch screen, since the touch input could be sensed from t₁ to t₂, the object could be moved to t₂, but since sensing the touch input from t₂ to tₙ fails, the object stops at t₂.

However, according to an exemplary embodiment, from t₁ to t₂, the object is moved using the coordinates from the touch input, while from t₂ to tₙ, the object is moved using the coordinates from the proximate input, and thus the object can be moved from t₁ to tₙ.

In a display apparatus 100 having a display unit 150 with a big size screen, maintaining the touch input from t₁ to tₙ may be inconvenient due to, for example, friction heat or the distance between t₁ to tₙ, etc. Therefore, the object could only be moved to t₂, or the input means had to be touched again. However, according to an exemplary embodiment, even in a display apparatus 100 with a display unit 150 having a big size screen, the coordinates can be calculated from the proximate input, and thus it is possible to move the object more easily and conveniently.

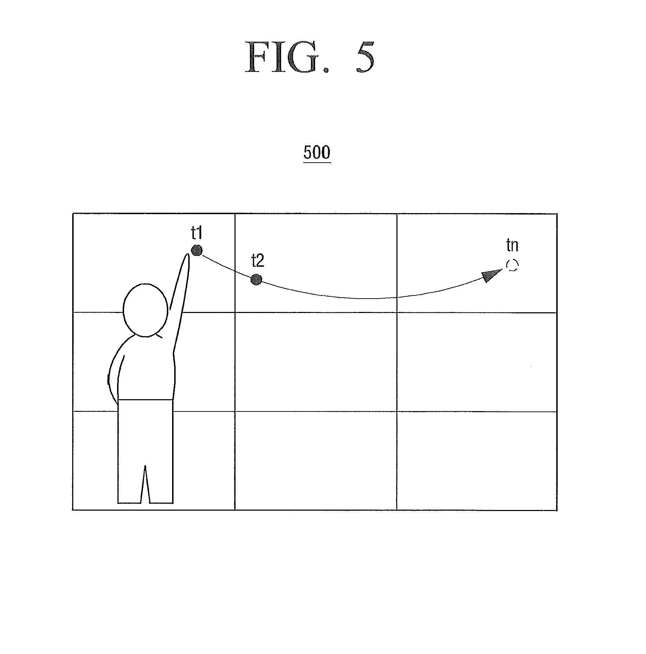

FIG. 5 illustrates an exemplary embodiment of a dragging of a user in a multi-display apparatus 500 according to an exemplary embodiment. The multi-display apparatus 500 includes a plurality of display apparatuses 100. In this example shown in FIG. 5, nine display apparatuses 100 are included in the multi-display apparatus 500. However, this is only an example, and the number of display apparatuses 100 may be any number greater than one. Herein, each display apparatus 100 of the multi-display apparatus 500 comprises both the touch sensing unit 110 and the proximity sensing unit 120.

Like in FIGS. 4A and 4B, FIG. 5 also illustrates the case in which the user drags an object from t₁ to tₙ, but the touch input is sensed only from t₁ to t₂, and the touch contact fails, and is thus not sensed, from t₂ to tₙ. However, again, during the drag from t₂ to tₙ, a certain distance (within 3∼5cm) is maintained between the display unit 150 and the input means.

Herein, just as in FIGS. 4A and 4B, from t₁ to t₂, the multi-display apparatus 500 moves the object using the coordinates from the touch input, and from t₂ to tₙ, moves the object using the coordinates from the proximate input. That is, as shown in the example of FIG. 5, the object is moved from a first display apparatus through a second display apparatus to a third display apparatus and then displayed.

Therefore, also in the multi-display apparatus 500 including a plurality of display apparatuses 100, when sensing of the touch input fails during a drag operation, it is possible to calculate the coordinates from the proximate input, and thus the object can be moved easily and conveniently.

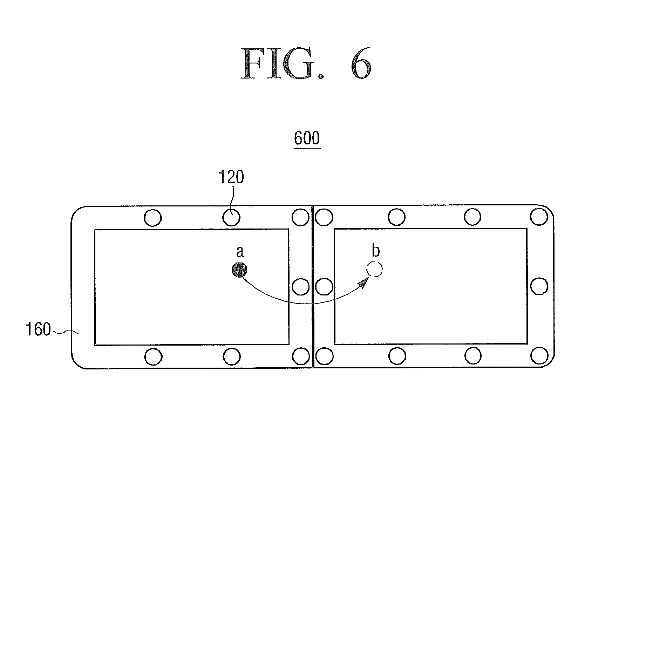

FIG. 6 illustrates an exemplary embodiment of a dragging operation performed by a user in the display apparatus 100 in which the proximity sensing unit 120 is provided in a bezel 160 of the display apparatus 100 according to an exemplary embodiment.

Similar to in FIG. 5, in a case of a multi-display apparatus 600 that includes a plurality of display apparatuses 100, each display apparatus 100 may comprise a bezel 160 around the edge of the display unit 150. In FIG. 6, the multi-display apparatus 600 is shown with two display apparatuses 100 as an example. Herein, when moving the object from a display apparatus 100 to another display apparatus 100, sensing the object sometimes fails since there is no sensing apparatus in the bezel.

Therefore, according to an exemplary embodiment, by equipping the bezel 160 with a plurality of proximity sensing units 120, the bezel 160 becomes able to sense the object without failure in the bezel 160 area. Accordingly, when an object is dragged from point a to point b across the bezels 160 surrounding the display apparatuses 100, the object may be sensed without failure as shown in FIG. 6.

According to the aforementioned exemplary embodiments, a user is able to move an object easily and conveniently since the display apparatus senses at least one of a touch input and a proximate input, and the user is provided with the same ease and convenience in a display apparatus having a big size screen or in a multi-display apparatus as well.

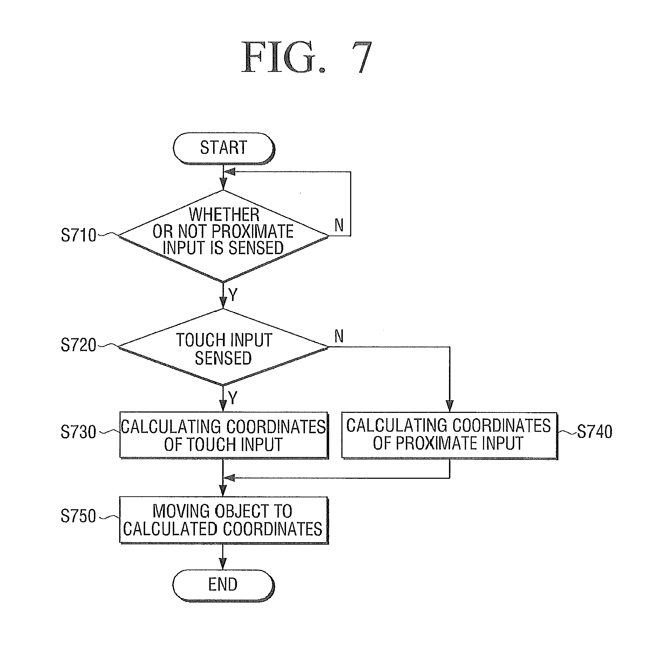

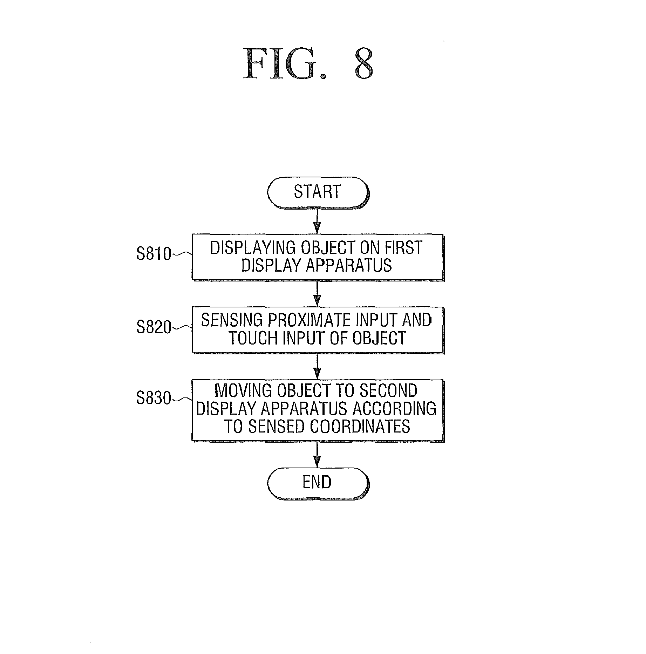

Hereinbelow, a method for moving an object using the touch input and the proximate input will be explained with reference to FIGS. 7 and 8.

FIG. 7 is a flow chart for explaining the method for moving an object in a display apparatus according to an exemplary embodiment.

The display apparatus 100 checks whether or not the proximate input by the proximity sensing unit 120 is sensed (S710). If the proximate input is sensed by the proximity sensing unit 120 (S710-Y), the display apparatus 100 checks whether or not the touch input is sensed by the touch sensing unit 110 (S720).

If the touch input is sensed by the touch sensing unit 110 (S720-Y), the display apparatus 100 calculates the coordinates using the touch input (S730). That is, if the touch input is sensed by the touch sensing unit 110, the display apparatus 100 calculates the coordinates using the touch input which has a higher resolution than the proximate input. In addition, the display apparatus 100 moves the object to the calculated coordinates (S750).

On the other hand, if the proximate input is sensed by the proximity sensing unit 120 (S710-Y) but the touch input is not sensed by the touch sensing unit 110 (S720-N), the display apparatus 100 calculates the coordinates using the proximate input (S740), and the display apparatus 100 moves the object to the coordinates calculated by the proximate input (S750).

Thus, the user is able to maintain an input such as dragging even if the touch event fails in mid-drag by calculating the coordinates using the touch input or the proximate input sensed by the touch sensing unit or the proximity sensing unit, respectively. Thus, the inconvenience felt when directly touching may be reduced.

FIG. 8 is a flow chart for explaining a method for moving an object in a multi-display apparatus 500 according to an exemplary embodiment. Herein, the multi-display apparatus 500 refers to a display system having a plurality of display apparatuses 100. Herein, each of the display apparatuses of the multi-display apparatus 500 comprises the touch sensing unit 110 and the proximity sensing unit 120.

The multi-display apparatus 500 displays the object on the first display apparatus among the plurality of display apparatuses (S810).

The multi-display apparatus 500 senses a touch input using the touch sensing unit 110 and a proximate input using the proximity sensing unit 120 (S820). For example, if the touch input is maintained from a first point of the first display apparatus to a second point of the first display apparatus, and the proximate input is sensed from the second point to a first point of the second display apparatus; from the first point to the second point of the display apparatus, the multi-display apparatus 500 senses the coordinates from the touch input, whereas from the second point of the first display apparatus to the first point of the second display apparatus, the multi-display apparatus 500 senses the coordinates from the proximate input.

When the touch input and the proximate input are sensed, the multi-display apparatus 500 moves the object from the first display apparatus to the second display apparatus and displays the object (S830).

Therefore, also in the multi-display apparatus 500 having a plurality of display apparatuses 100, it is possible to calculate the coordinates from the proximate input even if the touch input fails in mid-drag, thereby moving the object easily and conveniently.

As aforementioned, according to the various exemplary embodiments, by calculating the coordinates using an output from the touch sensing unit or the proximity sensing unit, the user is able to maintain the input such as dragging even if the touch event fails during the operation, reducing the inconvenience felt when directly touching.

Although a few exemplary embodiments of the present invention have been shown and described, it would be appreciated by those skilled in the art that changes may be made in the exemplary embodiments without departing from the invention, the scope of which is defined in the claims.

## Claims

1. A display apparatus comprising:
a display unit which displays an object;
a proximity sensing unit which is configured to sense an input proximate to the display unit;
a touch sensing unit which is configured to sense a touch input to the display unit;
a coordinates calculating unit which calculates coordinates corresponding to at least one of the proximate input sensed by the proximity sensing unit and the touch input sensed by the touch sensing unit; and
a controlling unit which controls the display unit to move the object to the calculated coordinates.

2. The display apparatus according to claim 1, wherein, when the touch input is sensed by the touch sensing unit after the proximate input is sensed by the proximity sensing unit, and the coordinates calculating unit calculates the coordinates based on the touch input sensed by the touch sensing unit.

3. The display apparatus according to claim 1, wherein, when the touch input is not sensed after the proximate input is sensed by the proximity sensing unit, and the coordinates calculating unit calculates the coordinates based on the proximate input sensed by the proximity sensing unit.

4. The display apparatus according to any one of claim 1 to claim 3, wherein a sensing resolution of the touch sensing unit is higher than a sensing resolution of the proximity sensing unit.

5. The display apparatus according to any one of claim 1 to claim 4, wherein, when the proximate input and the touch input alternate, and the coordinates calculating unit calculates coordinates of a point of the last input in a sequence of alternate proximate and touch inputs as the coordinates.

6. The display apparatus according to any one of claim 1 to claim 5, wherein the touch sensing unit uses at least one of a resistive touch method, a capacitive touch method, an infrared touch method, an optical touch method, and a surface acoustic wave touch method.

7. The display apparatus according to any one of claim 1 to claim 6, wherein the proximity sensing unit comprises a plurality of infrared sensors or a plurality of optical lens arrays.

8. The display apparatus according to any one of claim 1 to claim 7, wherein the display apparatus further comprise a bezel provided around an outer edge of the display apparatus, and the proximity sensing unit is distributed in the bezel.

9. A method for moving an object displayed on a display apparatus, the method comprising:
sensing at least one of a proximate input and a touch input to a display unit that displays the object;
calculating coordinates according to the at least one of the proximate input and the touch input that is sensed; and
moving the object to the calculated coordinates.

10. The method according to claim 9, wherein:
if the touch input is not sensed after the proximate input is sensed, calculating the coordinates of the proximate input; and
moving the object to the calculated coordinates.

11. The method according to claim 9, wherein:
if the proximity input and the touch input are sensed alternately, calculating coordinates of a point of the last input in a sequence of alternate proximity and touch inputs; and
moving the object to the calculated coordinates.

12. The method according to any one of claim 9 to claim 11, wherein the proximate input is sensed using an infrared method or an optical method.

13. The method according to any one of claim 9 to claim 12, wherein the touch input is sensed using at least one of a resistive touch method, a capacitive touch method, an infrared touch method, an optical touch method and a surface acoustic wave touch method.

14. The method according to any one of claim 9 to claim 13, wherein the touch input is sensed at a sensing resolution that is higher than a sensing resolution at which the proximate input is sensed.

15. A method for moving an object displayed using a multi-display apparatus that includes a plurality of display apparatuses, the method comprising:
displaying the object on a first display apparatus among the plurality of display apparatuses;
sensing at least one of a proximate input and a touch input of the object on the first display apparatus, the at least one of the proximate input and the touch input continuing to a second display apparatus of the plurality of display apparatuses; and
moving the object to the second display apparatus according to the at least one of the proximate input and the touch input that is sensed.
